(19)

Europäisches
Patentamt
European
Patent Office
Office européen
des brevets

(11) **EP 4 738 527 A1**

(12) **EUROPEAN PATENT APPLICATION**
published in accordance with Art. 153(4) EPC

(43) Date of publication:
06.05.2026  Bulletin 2026/19

(21) Application number: 25803819.9

(22) Date of filing: 12.05.2025

(51) International Patent Classification (IPC):
*H01M 10/44* (2006.01)      *H01M 10/48* (2006.01)
*H01M 10/42* (2006.01)

(52) Cooperative Patent Classification (CPC):
**H01M 10/42; H01M 10/44; H01M 10/48;**
Y02E 60/10; Y02P 70/50

(86) International application number:
**PCT/KR2025/006356**

(87) International publication number:
**WO 2025/239621 (20.11.2025 Gazette 2025/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 14.05.2024  KR 20240063470
23.04.2025  KR 20250052890

(71) Applicant: **LG Energy Solution, Ltd.
Seoul 07335 (KR)**

(72) Inventors:
• **LEE, Seok Ha**
**Daejeon 34122 (KR)**
• **BAE, Joon Sung**
**Daejeon 34122 (KR)**
• **KIM, Ryun Hwan**
**Daejeon 34122 (KR)**
• **CHA, Jae Min**
**Daejeon 34122 (KR)**

(74) Representative: **Goddar, Heinz J.
Boehmert & Boehmert
Anwaltspartnerschaft mbB
Pettenkoferstrasse 22
80336 München (DE)**

(54)  **METHOD FOR MANUFACTURING SECONDARY BATTERY**

(57)    Disclosed herein relates to a secondary battery manufacturing method. The method includes: discharging a plurality of battery cells; and evaluating the plurality of battery cells based on the voltage and current of the plurality of battery cells measured during discharge of the plurality of battery cells, wherein evaluating the plurality of battery cells includes calculating electrical parameters of the plurality of battery cells and standardizing the electrical parameters of the plurality of battery cells to calculate standardized electrical parameters of the plurality of battery cells.

[FIG. 3]

P120

| CALCULUATING ELECTRICAL PARAMETERS OF PLURALITY OF BATTERY CELLS | — P121 |
| STANDARDIZING ELECTRICAL PARAMETERS OF PLURALITY OF BATTERY CELLS | — P123 |
| EVALUATING PLURALITY OF BATTERY CELLS BASED ON MODEL | — P125 |

EP 4 738 527 A1

## Description

[Technical Field]

The present disclosure relates to a secondary battery manufacturing method. This application claims the benefit of Korean Patent Application No. 10-2024-0063470, filed on May 14, 2024 and Korean Patent Application No. 10-2025-0052890, filed on April 23, 2025, the disclosure of which is incorporated herein by reference.

[Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the range of battery electric vehicles (BEVs) has increased to levels comparable to fuel vehicles, the primary use of secondary batteries is shifting from mobile devices to mobility.

Secondary batteries are manufactured through electrode processes, assembly processes, and activation processes. In the electrode process, an electrode assembly including a positive electrode, a negative electrode, and a separator may be provided. In the assembly process, the electrode assembly and electrolyte may be enclosed within a case. In the activation process, the assembled battery cell may undergo charging, discharging, and aging stages. Through the activation process, the battery cell can be activated and stabilized by electrical energy. \

[Summary]

[Technical Problem]

The technical problem addressed by the present disclosure is to provide a secondary battery manufacturing method with improved throughput.

[Technical Solution]

According to exemplary embodiments of the present disclosure for solving the aforementioned problems, a secondary battery manufacturing method is provided. The method includes: discharging a plurality of battery cells; and evaluating the plurality of battery cells based on the voltage and current of the plurality of battery cells measured during discharge of the plurality of battery cells, wherein evaluating the plurality of battery cells includes calculating electrical parameters of the plurality of battery cells and standardizing the electrical parameters of the plurality of battery cells to calculate standardized electrical parameters of the plurality of battery cells.

The electrical parameters include voltage.

The electrical parameters include differential voltage.

The electrical parameters include differential capacity.

The electrical parameters of the plurality of battery cells are standardized based on the average and standard deviation of the electrical parameters of the plurality of battery cells.

The plurality of battery cells is simultaneously transferred by a battery tray.

Evaluating the plurality of battery cells is based on the standardized electrical parameters of the plurality of battery cells and an outlier detection model.

The outlier detection model is trained based on the electrical parameters of a plurality of normal battery cells.

The outlier detection model is trained based on the electrical parameters of first normal battery cells among the plurality of normal battery cells, and the distance between the electrical parameters of the first normal battery cells and the average of the electrical parameters of the normal battery cells is three times the standard deviation or less.

Discharging the plurality of battery cells is characterized by not fully discharging the plurality of battery cells.

The plurality of battery cells is discharged to a predetermined voltage.

The predetermined voltage may be higher than the discharge cutoff voltage.

Evaluating the plurality of battery cells may be performed during discharging of the plurality of battery cells or after discharging has ended.

According to exemplary embodiments, a secondary battery manufacturing method is provided. The method includes: charging a plurality of battery cells; and evaluating the plurality of battery cells based on the voltage and current of the plurality of battery cells measured while charging the plurality of battery cells, wherein evaluating the plurality of battery cells includes calculating electrical parameters of the plurality of battery cells and standardizing the electrical parameters of the plurality of battery cells to calculate standardized electrical parameters of the plurality of battery cells.

The electrical parameters include voltage.

The electrical parameters include differential voltage.

The electrical parameters include differential capacity.

The electrical parameters of the plurality of battery cells are standardized based on the average and standard deviation of the electrical parameters of the plurality of battery cells.

The plurality of battery cells is simultaneously transferred by a battery tray.

Evaluating the plurality of battery cells is based on the standardized electrical parameters of the plurality of battery cells and an outlier detection model.

The outlier detection model is trained based on the electrical parameters of a plurality of normal battery cells.

The outlier detection model is trained based on the electrical parameters of first normal battery cells among the plurality of normal battery cells, and the distance between the electrical parameters of the first normal battery cells and the average of the electrical parameters of the normal battery cells is three times the standard deviation or less.

Charging the plurality of battery cells is characterized by not fully charging the plurality of battery cells.

Evaluating the plurality of battery cells may be performed during charging of the plurality of battery cells or after charging has ended.

[Advantageous Effects]

According to exemplary embodiments of the present disclosure, it is possible to determine defects in battery cells based on standardized electrical parameters and models during the discharge process. Consequently, the ability to identify defects in battery cells can be enhanced, and the throughput of secondary battery manufacturing can be improved.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

[Brief Description of the Drawings]

FIG. 1 is a drawing illustrating the secondary battery manufacturing facility according to exemplary embodiments.

FIGS. 2 and 3 are flowcharts illustrating the secondary battery manufacturing method according to exemplary embodiments.

FIGS. 4 through 9 are graphs illustrating the secondary battery manufacturing method according to exemplary embodiments.

FIG. 10 is a graph illustrating the effect of the secondary battery manufacturing method according to exemplary embodiments.

FIG. 11 is a graph illustrating the discharge interval according to exemplary embodiments.

FIG. 12 is a graph illustrating the discharge interval according to exemplary embodiments.

FIG. 13 is a flowchart illustrating a secondary battery manufacturing method according to exemplary embodiments.

[Best Mode for Carrying out the Invention]

According to exemplary embodiments of the present disclosure, a secondary battery manufacturing method is provided. The method includes: discharging a plurality of battery cells; and evaluating the plurality of battery cells based on the voltage and current of the plurality of battery cells measured during discharge of the plurality of battery cells, wherein evaluating the plurality of battery cells includes calculating electrical parameters of the plurality of battery cells and standardizing the electrical parameters of the plurality of battery cells to calculate standardized electrical parameters of the plurality of battery cells.

According to exemplary embodiments of the present disclosure, a secondary battery manufacturing method is provided. The method includes: charging a plurality of battery cells; and evaluating the plurality of battery cells based on the voltage and current of the plurality of battery cells measured while charging the plurality of battery cells, wherein evaluating the plurality of battery cells includes calculating electrical parameters of the plurality of battery cells and standardizing the electrical parameters of the plurality of battery cells to calculate standardized electrical parameters of the plurality of battery cells.

[Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best explain his disclosure.

Accordingly, it is to be understood that the embodiments described herein and the configurations shown in the drawings are only the most preferred embodiments of the disclosure and do not represent all of the technical ideas of the disclosure, and that there may be various equivalents and modifications that may be substituted for them at the time of filing the present application.

Furthermore, in describing the disclosure, specific descriptions of relevant disclosed configurations or features are omitted where it is believed that such detailed description would obscure the essence of the disclosure.

Because the embodiments of the present disclosure are provided to more fully illustrate the disclosure to those of ordinary skill in the art, the shapes and sizes of the components in the drawings may be exaggerated, omitted, or shown schematically for clarity. Accordingly, the size or proportion of each component is not necessarily indicative of its actual size or proportion.

(First and Second embodiment)

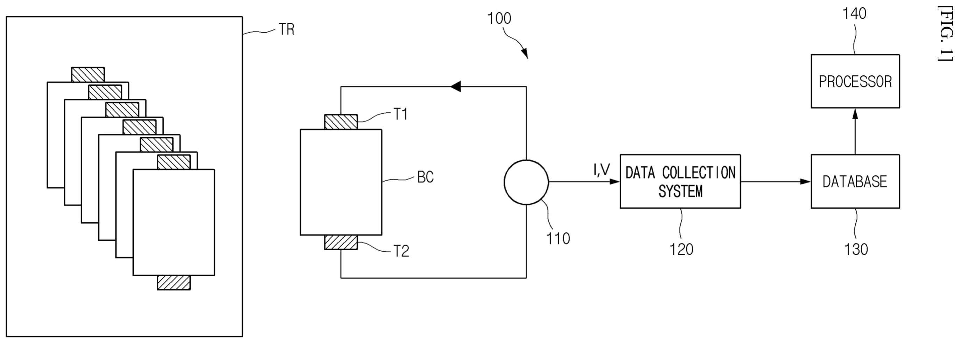

FIG. 1 is a drawing illustrating a secondary battery manufacturing facility 100 according to exemplary embodiments.

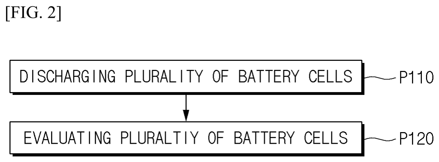

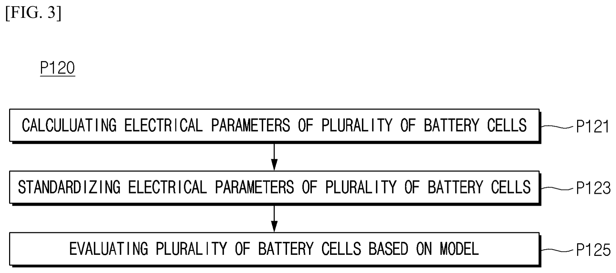

FIGS. 2 and 3 are flowcharts illustrating a secondary battery manufacturing method according to exemplary embodiments.

1 through 3 Referring to FIGS., at P110, a plurality of battery cells (BC) can be discharged. The plurality of battery cells (BC) may be secondary battery cells. The plurality of battery cells (BC) are lithium-ion batteries, i.e., the basic unit of a secondary battery. The plurality of battery cells (BC) includes an electrode assembly, an electrolyte, and a case. The plurality of battery cells (BC) is classified as lithium-ion batteries, lithium-ion polymer batteries, lithium polymer batteries, etc., depending on the composition of the electrode assembly and electrolyte. Lithium-ion polymer batteries have a low risk of electrolyte leakage and are easy to manufacture, increasing their market share within secondary batteries.

The plurality of battery cells (BC) is classified by battery case shape into cylindrical, prismatic, and pouch-type. Cylindrical batteries include an electrode assembly and a cylindrical metal can enclosing it. Prismatic batteries include an electrode assembly and a prismatic metal can that houses it. Pouch-type plurality of battery cells (BC) include an electrode assembly and a pouch case that houses it.

The electrode assembly includes a positive electrode, a negative electrode, and a separator interposed between the positive electrode and negative electrode. The electrode assembly is classified into jelly-roll type and stack-type based on its assembly form. The jelly-roll type consists of a positive electrode, a negative electrode, and a separator interposed between them, wound into a roll. The stack-type includes plurality of positive electrodes, plurality of negative electrodes, and plurality of separators interposed between them, stacked sequentially.

The positive electrode may include a positive electrode current collector and a positive electrode active material. The negative electrode may include a negative electrode current collector and a negative electrode active material.

The thickness of the positive electrode current collector ranges from about 3 $\mu$m to about 500 $\mu$m. The positive electrode current collector may not cause chemical changes in the secondary battery ultimately manufactured and may have high conductivity. The positive electrode current collector may include, for example, stainless steel, aluminum, nickel, titanium, ductile carbon, and aluminum. The positive electrode current collector may also include stainless steel surface-treated with carbon, nickel, titanium, silver, etc. The surface of the positive electrode current collector may include a fine irregular structure to enhance the adhesion of the active material. The positive electrode current collector may have a shape such as a film, sheet, foil, net, porous material, foam, or nonwoven fabric.

The thickness of the negative electrode current collector may range from approximately 3 $\mu$m to approximately 500 $\mu$m. The negative electrode current collector may not induce chemical changes in the secondary battery ultimately manufactured and may possess high conductivity. The negative electrode current collector may include copper, stainless steel, aluminum, nickel, titanium, graphite, and aluminum-cadmium alloys. The negative electrode current collector may also include stainless steel surface-treated with carbon, nickel, titanium, silver, etc. The surface of the negative current collector may include a fine irregular structure to enhance the adhesion of the active material. The negative current collector may have a shape such as film, sheet, foil, net, porous, foam, or nonwoven fabric.

The positive active material is a substance capable of undergoing electrochemical reactions. The positive active material may be a lithium transition metal oxide. The positive electrode active material may include, for example, layered compounds such as lithium cobalt oxide ($LiCoO_2$) and lithium nickel oxide ($LiNiO_2$) substituted with one or more transition metals, lithium manganese oxide substituted with one or more transition metals, lithium nickel-based oxide represented by the chemical formula $LiNi_{1-y}M_yO_2$ (where M is any one of Co, Mn, Al, Cu, Fe, Mg, B, Cr, Zn, and Ga, and $0.01 \leq y \leq 0.7$), lithium-nickel-cobalt-manganese composite oxide represented by $Li_{1+z}Ni_bMn_cCo_{1-(b+c+d)}M_dO_{(2-e)}A_e$, such as $Li_{1+z}Ni_{1/3}Co_{1/3}Mn_{1/3}O_2$ and $Li_{1+z}Ni_{0.4}Mn_{0.4}Co_{0.2}O_2$ (where $-0.5 \leq z \leq 0.5$, $0.1 \leq b \leq 0.8$, $0.1 \leq c \leq 0.8$, $0 \leq d \leq 0.2$, $0 \leq e \leq 0.2$, $b + c + d < 1$, and olivine-based lithium metal phosphate with the chemical formula $Li_{1+x}M_{1-y}M'_yPO_{4-z}X_z$ (where M is a transition metal, more specifically one of Fe, Mn, Co, and Ni, M' is one of Al, Mg, and Ti, X is one of F, S, and N, $-0.5 \leq x \leq +0.5$, $0 \leq y \leq 0.5$, and $0 \leq z \leq 0.1$).

The negative electrode active material may include carbon, such as non-graphitized carbon or graphite-based carbon. The negative electrode active material may include, for example, a metal-oxide composite such as $Li_xFe_2O_3$ ($0 \leq x \leq 1$), $Li_xWO_2$ ($0 \leq x \leq 1$), $Sn_xMe_{1-x}Me'_yO_z$ (where Me is one of Mn, Fe, Pb, and Ge, and Me' is one of Al, B, P, Si, Group 1, 2, or 3 elements of the periodic table, or halogens, where $0 < x \leq 1$, $1 \leq y \leq 3$, and $1 \leq z \leq 8$). The negative electrode active material may include, for example, lithium metal, lithium alloys, silicon-based alloys, and tin-based alloys. The negative electrode active material may include, for example, metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$,

$Bi_2O_4$, $Bi_2O_5$. The negative electrode active material may include, for example, conductive polymers such as polyacetylene, Li-Co-Ni based materials, etc.

The plurality of battery cells (BC) may be provided by electrode processes and assembly processes. The electrode processes may include mixing processes, coating processes, roll-pressing processes, selective slitting processes, and notching processes. The assembly processes may include embedding the electrode assembly within a case and subsequently injecting electrolyte into the case.

The plurality of battery cells (BC) may be discharged by the secondary battery manufacturing facility 100. The plurality of battery cells (BC) may be charged by the secondary battery manufacturing facility 100 prior to being discharged by the secondary battery manufacturing facility 100. According to exemplary embodiments, the secondary battery manufacturing facility 100 may include a power source 110, a data collection system 120, a database 130, and a processor 140.

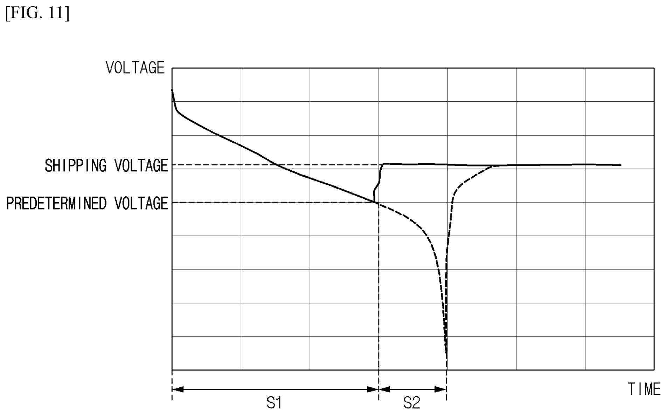

According to exemplary embodiments, the plurality of battery cells (BC) may not be fully discharged. The plurality of battery cells (BC) may be discharged to a predetermined voltage. The predetermined voltage is described in detail below in FIG. 11.

According to exemplary embodiments, the power source 110 may be a current source, but is not limited thereto. The power source 110 may also be a voltage source. The power source 110 may be configured to apply a current (I) to the first and second terminals T1, T2 of each of the plurality of battery cells (BC). The plurality of battery cells (BC) may be charged or discharged by the current (I). The power source 110 may be configured to measure the voltage between the first and second terminals T1, T2 of each of the plurality of battery cells (BC) while the current (I) is applied.

The data collection system 120 may be configured to collect the current (I) and voltage (V). The data collection system 120 may be configured to calculate the capacity Q of the plurality of battery cells (BC) based on the current (I). The capacity Q of the plurality of battery cells (BC) may also be calculated by the power source 110. The capacity Q of the plurality of battery cells (BC) may be calculated based on the following Equation 1.

[Equation 1]

$$Q = \int I dt$$

Determining the capacity Q of the plurality of battery cells (BC) as a function of current and time is called coulomb counting. The unit of the capacity Q of the plurality of battery cells (BC) may be ampere-hours (Ah). Subsequently, at P120, the plurality of battery cells (BC) can be evaluated. By evaluating the plurality of battery cells (BC), defective ones among the plurality of battery cells (BC) can be determined. P120 may include P121, P123, and P125 shown in FIG. 3.

According to exemplary embodiments, standardized electrical parameters of the plurality of battery cells (BC) may be collected during discharge of the plurality of battery cells (BC).

According to exemplary embodiments, evaluation of the electrical parameters collected during discharge of the plurality of battery cells (BC) may be performed during discharge of the plurality of battery cells (BC) or after discharge termination. In some embodiments, discharge of defective ones among the plurality of battery cells (BC) may be stopped based on the evaluation results. Accordingly, the time and energy consumed for defect detection can be reduced. In some embodiments, the plurality of battery cells (BC) can be charged after discharge. For example, after discharging the plurality of battery cells (BC), they can be charged until the voltage of the plurality of battery cells (BC) rises to the shipping voltage. The shipping voltage refers to the voltage set after the battery cell is manufactured but before shipment or transport. The shipping voltage may be set lower than the fully charged state, generally considering factors like long-term storage stability. In some embodiments, charging of defective ones among the plurality of battery cells (BC) can be stopped based on the evaluation results. Accordingly, the time and energy consumed in the defect detection process can be reduced. Meanwhile, in some embodiments, evaluating the plurality of battery cells (BC) may include evaluating electrical parameters collected during charging the plurality of battery cells (BC) before discharging them.

At P121, electrical parameters of the plurality of battery cells (BC) may be calculated. The electrical parameters of the plurality of battery cells (BC) may be calculated by the data collection system 120, but are not limited thereto. The electrical parameters of the plurality of battery cells (BC) may be calculated by the power supply 110 or by the processor 140.

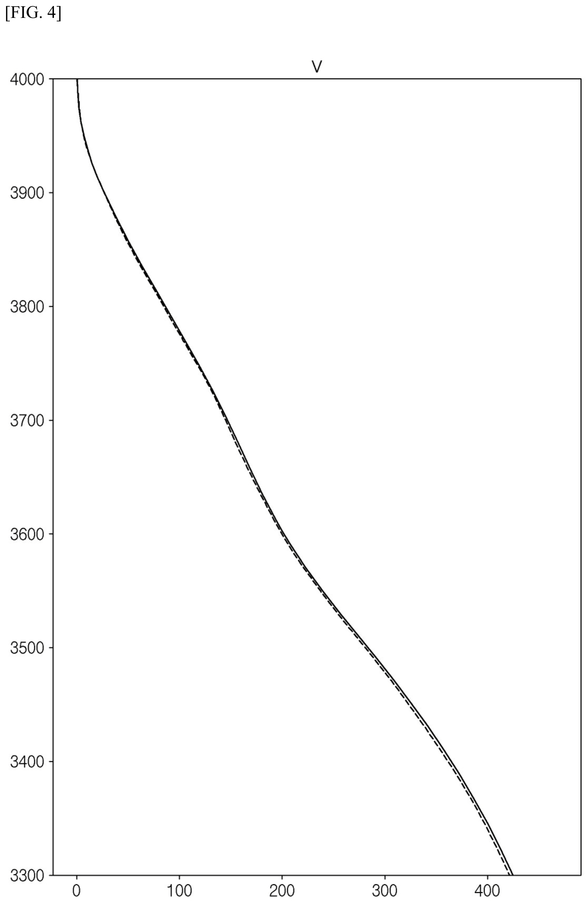

According to exemplary embodiments, the electrical parameters of the plurality of battery cells (BC) may include voltage (V). FIG. 4 is a graph showing voltage (V) over time. In FIGS. 4 through 10, the solid line represents data points collected from the normal battery cells (BC) among the plurality of battery cells (BC), and the dashed line represents data points collected from the defective battery cells (BC) among the plurality of battery cells (BC).

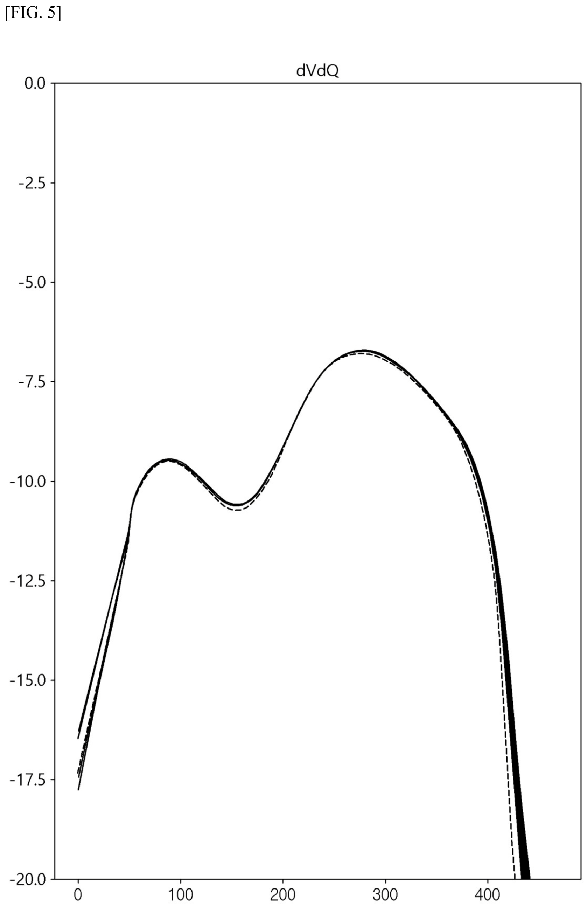

According to exemplary embodiments, the electrical parameters of the plurality of battery cells (BC) may include a differential voltage calculated by the following Equation 2. FIG. 5 is a graph showing the differential voltage over time.

[Equation 2]

$$\text{Differential Voltage} = \frac{\Delta V}{\Delta Q}$$

The differential voltage is the rate of change of voltage (V) with respect to the change in capacity Q during the discharge or charge process of the plurality of battery cells (BC). The differential voltage can be calculated from a finite number of intervals or from an infinite number of infinitesimal intervals. The differential voltage can represent the change in voltage (V) of the plurality of battery cells (BC) due to the electrochemical reactions of the plurality of battery cells (BC).

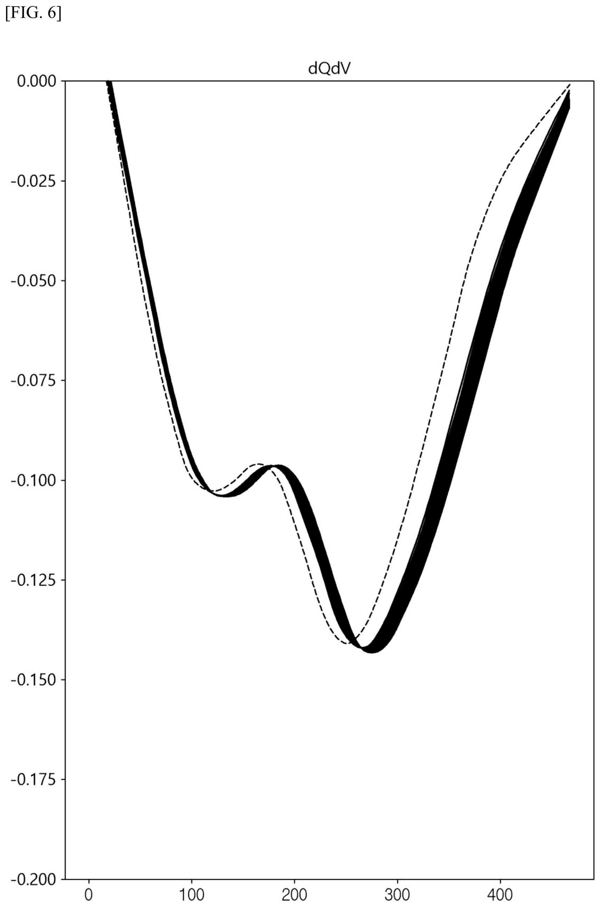

According to exemplary embodiments, the electrical parameters of the plurality of battery cells (BC) may include the differential capacity calculated by the following Equation 3. FIG. 6 is a graph showing the differential capacity over time.

[Equation 3]

$$\text{Differential Capacity} = \frac{\Delta Q}{\Delta V}$$

That is, differential capacity is the rate of change of capacity Q with respect to the change in voltage (V) during the charging or discharging process of the plurality of battery cells (BC). Differential capacity can be calculated from multiple finite intervals or from infinite infinitesimal intervals. Differential capacity can be the differential value of capacity (Q) with respect to battery voltage (V).

When charging or discharging a battery, voltage (V) and capacity (Q) exhibit a nonlinear relationship, meaning the differential capacity and differential voltage can have variable values. Differential capacity and differential voltage can provide insights into the interpretation of the nonlinear relationship between voltage (V) and capacity (Q). For example, sharp peaks in the differential capacity and differential voltage curves may indicate physical and chemical changes occurring inside the battery, such as electrode decomposition and lithium plating.

The differential capacity and differential voltage of the plurality of battery cells (BC) can be used to evaluate the performance, efficiency, internal state, state of charge (SOC), state of health (SOH), lifespan, and factors contributing to performance degradation of the plurality of battery cells (BC). The differential capacity and differential voltage of the plurality of battery cells (BC) can be used for performance evaluation and lifespan prediction under various operating conditions of the plurality of battery cells (BC), diagnosis of internal failure mechanisms, design of battery management systems (hereinafter, BMS), and optimization of BMS.

Subsequently, at P123, the electrical parameters of the plurality of battery cells (BC) can be standardized. The electrical parameters of the plurality of battery cells (BC) can be standardized by the data collection system 120, thereby enabling the calculation of standardized electrical parameters.

The electrical parameters may be standardized based on the average of the electrical parameters of the plurality of battery cells (BC) simultaneously transferred by the battery tray (TR) and the standard deviation of the electrical parameters of the plurality of battery cells (BC) simultaneously transferred by the battery tray (TR). Here, standardization is the difference between the feature value and the average divided by the standard deviation. Here, the feature values are the electrical parameters of the plurality of battery cells (BC), the average is the average of the electrical parameters of the battery cells (BC) simultaneously transferred by the battery tray (TR), and the standard deviation is the standard deviation of the electrical parameters of the battery cells (BC) simultaneously transferred by the battery tray (TR).

The plurality of battery cells (BC) can be transferred simultaneously by a battery tray (TR). The plurality of battery cells (BC) can be loaded onto a battery tray (TR) for efficient transportation. The plurality of battery cells (BC) may include all battery cells (BC) transferred simultaneously by a battery tray (TR). Battery cells (BC) transferred simultaneously by a battery tray (TR) can be manufactured under similar conditions. Accordingly, deviations in standardized electrical parameters, representing differences among battery cells (BC) under similar conditions, may contain information about defects.

A person skilled in the art will readily arrive at embodiments wherein standardized parameters are calculated based on a subset of the entire battery cells (BC) simultaneously transferred by the battery tray (TR) (i.e., a portion of the entire battery cells (BC) transferred at once by the battery tray (TR)), based on the description herein.

Furthermore, a person skilled in the art will readily arrive at embodiments wherein standardized parameters are calculated based on entire battery cells (BC) transferred simultaneously by two or more battery trays (TR), based on the description herein.

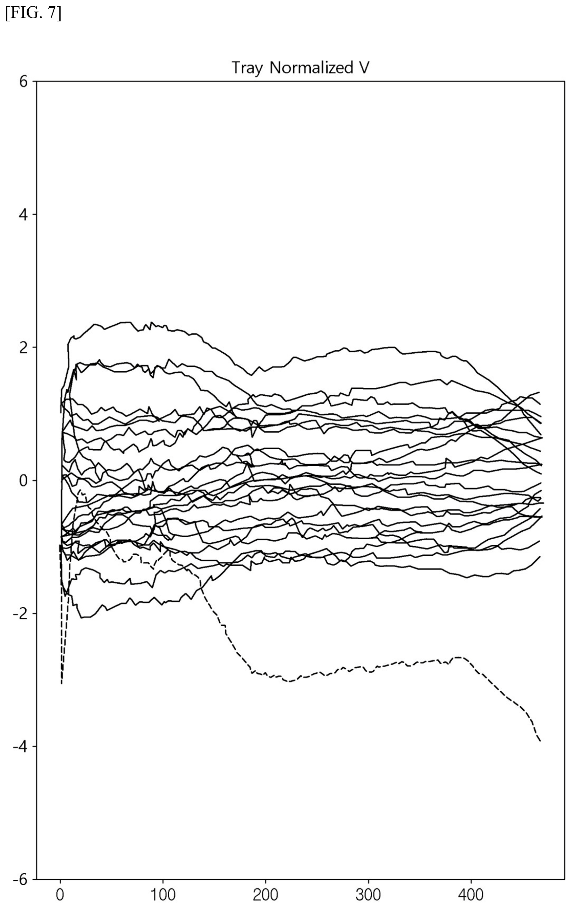

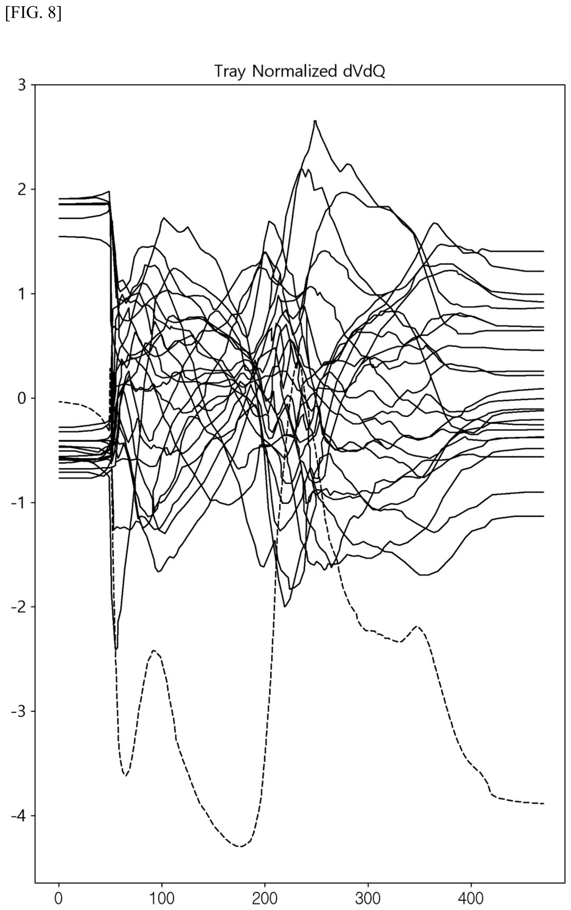

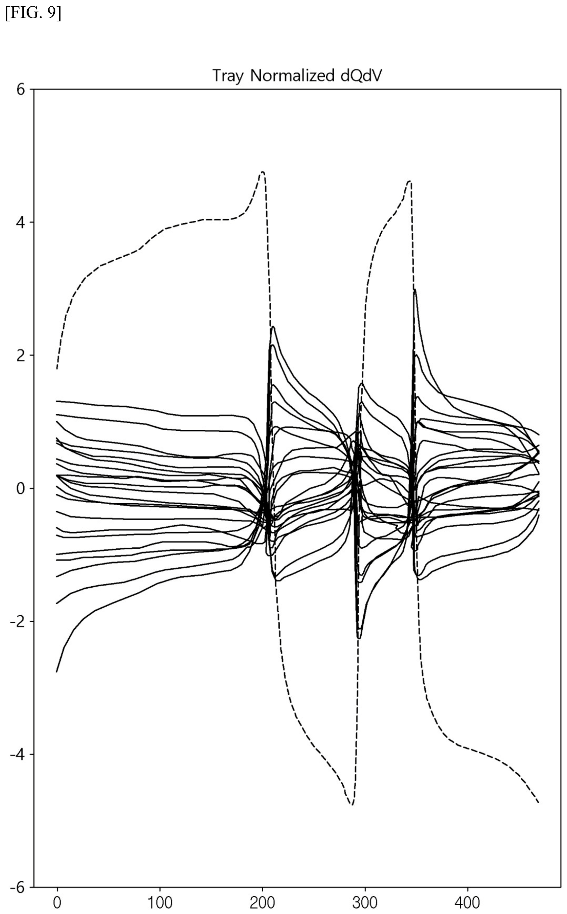

FIG. 7 may represent the standardized voltage of the plurality of battery cells (BC), FIG. 8 may represent the standardized differential voltage of the plurality of battery cells (BC), and FIG. 9 may represent the standardized differential capacity of the plurality of battery cells (BC).

In FIGS. 4 and 7, dashed lines represent the voltage and standardized voltage of defective battery cells (BC), while solid lines represent the voltage and standardized voltage of normal battery cells (BC). Referring to FIGS. 1, 4, and 7, it is confirmed that defective battery cells (BC) are more easily distinguished in the graph of standardized voltage.

In FIGS. 5 and 8, dashed lines represent the differential voltage and standardized differential voltage of defective battery cells (BC), while solid lines represent the differential voltage and standardized differential voltage of normal battery cells (BC). Referring to FIG. 1, FIG. 5, and FIG. 8, it was confirmed that defective battery cells (BC) are more easily distinguished on the graph of standardized differential voltage.

In FIGS. 6 and 9, the dashed line represents the differential capacity and standardized differential capacity of a defective battery cell (BC), while the solid line represents the differential capacity and standardized differential capacity of normal battery cells (BC). Referring to FIGS. 1, 6, and 9, it was confirmed that defective battery cells (BC) are more easily distinguished on the graph of standardized differential capacity.

The data collection system 120 may be configured to transmit the electrical parameters and standardized electrical parameters of the plurality of battery cells (BC) to a database 130. The database 130 may be configured to store the electrical parameters and standardized electrical parameters of the plurality of battery cells (BC). The database 130 may be a Network Attached Storage (NAS). The database 130 may also be a data warehouse.

The processor 140 may be configured to load the electrical parameters and standardized electrical parameters of the plurality of battery cells (BC) from the database 130. The processor 140 may include a model configured to evaluate the plurality of battery cells (BC) based on the standardized electrical parameters of the plurality of battery cells (BC).

The model of the processor 140 may include, but is not limited to, an outlier detection model. The model of the processor 140 may be trained based on standardized electrical parameters of normal battery cells. The model of the processor 140 may be trained based on standardized electrical parameters of some of the normal battery cells. Accordingly, the model of the processor 140 may be configured to determine a battery cell (BC) to be defective if it has standardized electrical parameters exhibiting a pattern different from the standardized electrical parameters of the normal battery cells.

The electrical parameters of the normal battery cells used for training the model of the processor 140 can be determined based on their distance from the average of the standardized electrical parameters of the normal battery cells. For example, the distance between the electrical parameters of the battery cells used for training the model of the processor 140 and the average of the electrical parameters can be less than or equal to approximately 4 times the standard deviation. For example, the distance between the electrical parameters of the battery cells used to train the model of the processor 140 and the average of the electrical parameters may be less than or equal to approximately 3.5 times the standard deviation. For example, the distance between the electrical parameters of the battery cells used to train the model of the processor 140 and the average of the electrical parameters may be less than or equal to approximately 3 times the standard deviation. For example, the distance between the electrical parameters of the battery cells used to train the model of the processor 140 and the average of the electrical parameters may be less than or equal to approximately 2.5 times the standard deviation. For example, the distance between the electrical parameters of the battery cells used to train the model of the processor 140 and the average of the electrical parameters may be less than or equal to approximately 2 times the standard deviation.

The data collection system 120, database 130, and processor 140 may be instantiated using hardware, firmware, software, or a combination thereof. For example, the data collection system 120, database 130, and processor 140 may include computing devices such as workstation computers, desktop computers, laptop computers, tablet computers, and the like. The data collection system 120, database 130, and processor 140 may also include any one of a simple controller, a complex processor such as a microprocessor, CPU, or GPU, a processor configured by software, dedicated hardware, and firmware. The data collection system 120, database 130, and processor 140 may be instantiated, for example, by a general-purpose computer or application-specific hardware such as a DSP (Digital Signal Processor), FPGA (Field Programmable Gate Array), and ASIC (Application Specific Integrated Circuit).

The operation of the data collection system 120, database 130, and processor 140 may be instantiated as instructions stored on a machine-readable medium that can be read and executed by one or more processors. Here, machine-readable media may include any mechanism for storing and/or transmitting information in a form readable by a machine (e.g., a computing device). For example, machine-readable media may include ROM (Read Only Memory), RAM (Random Access Memory), magnetic disk storage media, optical storage media, flash memory, electrical, optical, acoustic, or other forms of radio wave signals (e.g., carrier waves, infrared signals, digital signals, etc.), and any other signals.

The data collection system 120, database 130, and processor 140 may comprise firmware, software, routines, and instructions for performing the aforementioned operations or any process described below. For example, the data collection system 120, database 130, and processor 140 may be instantiated within memory.

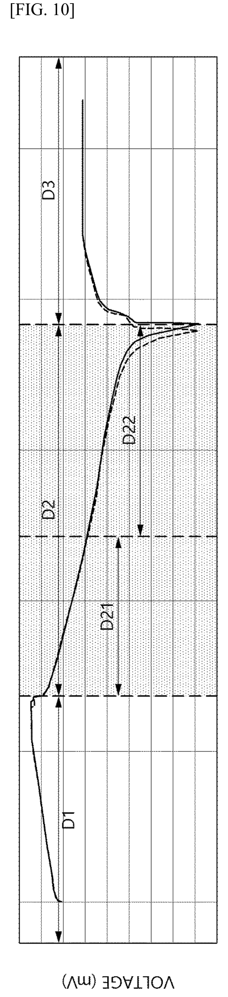

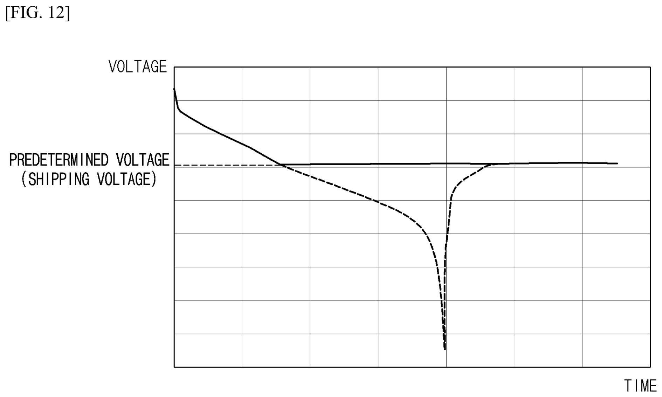

FIG. 10 is a graph illustrating effects according to exemplary embodiments. FIG. 11 is a graph illustrating a discharge interval according to exemplary embodiments. FIG. 12 is a graph illustrating a discharge interval according to exemplary embodiments. In FIGS. 11 and 12, the unit on the horizontal axis may be minutes, and the unit on the vertical axis may be volts [V].

Referring to FIGS. 1 and 10, a conventional secondary battery manufacturing method includes: an interval (D1) for fully charging a plurality of battery cells (BC) to evaluate them based on voltage-differential capacity and differential voltage; a discharge interval (D2) during which a plurality of battery cells (BC) is discharged, and a charge interval (D3) during which a plurality of battery cells (BC) is charged to a shipping voltage level.

According to exemplary embodiments, the plurality of battery cells (BC) is evaluated based on standardized electrical parameters and models, allowing the plurality of battery cells (BC) to be evaluated based on data collected over a relatively short period of time.

A secondary battery manufacturing method according to exemplary embodiments may include an interval (D1) for fully charging a battery and an interval (D21) for discharging the plurality of battery cells (BC) to the shipping voltage level. Accordingly, an interval (D22) additionally required to fully discharge the plurality of battery cells (BC) and an interval (D3) for charging to the shipping voltage level may be omitted, and the throughput of secondary battery manufacturing may be improved.

A secondary battery manufacturing method according to exemplary embodiments may not fully charge the battery during the charging interval (D1). Referring to FIGS. 1 and 11, according to exemplary embodiments, the plurality of battery cells (BC) may be discharged to a predetermined voltage.

In FIG. 11, the solid line indicates the case where the plurality of battery cells (BC) is discharged to a predetermined voltage when performing a defect test according to an exemplary embodiment of the present disclosure. In FIG. 12, the dashed line indicates a case where the plurality of battery cells (BC) is discharged to a voltage lower than the predetermined voltage. The secondary battery manufacturing method according to the exemplary embodiments of the present disclosure may include an interval where the plurality of battery cells (BC) is discharged to the predetermined voltage, as in the case of the solid line. In some embodiments, the voltage lower than the predetermined voltage may be the discharge cutoff voltage.

In some embodiments, the plurality of battery cells (BC) may be discharged to the predetermined voltage for defect inspection. For example, the plurality of battery cells (BC) may be discharged to the predetermined voltage in a first section (S1). In the first section (S1), the solid line and the dashed line are shown overlapping. The plurality of battery cells (BC) may not be discharged in the second section (S2). The rate of change of the slope of the graph in the second section (S2) may be greater than the rate of change of the slope in the first section (S1). The secondary battery manufacturing method according to an exemplary embodiment of the present disclosure may include only discharge in the first section (S1) and may not include discharge in the second section (S2). The secondary battery manufacturing method according to the exemplary embodiment may include a section (S1) for discharging the plurality of battery cells (BC) within a voltage range where the rate of change of voltage with respect to time is substantially constant. The secondary battery manufacturing method according to the exemplary embodiment may include a section (S1) for discharging the plurality of battery cells (BC) within a voltage range where the rate of change of voltage with respect to time does not change drastically.

According to another embodiment, the secondary battery manufacturing method may include both discharge in the first section (S1) and discharge in the second section (S2). For example, the secondary battery manufacturing method may include both discharge in the first section (S1) and discharge in the second section (S2), without fully charging the plurality of battery cells (BC) for defect inspection.

In some embodiments, the predetermined voltage may be higher than the discharge cutoff voltage. The discharge cutoff voltage may refer to the minimum voltage set to stop the discharge of the battery cell. If discharge continues below the discharge cutoff voltage, performance degradation or damage to the battery cell may occur. The discharge cutoff voltage may be determined experimentally or statistically in advance.

In some embodiments, the predetermined voltage may be set based on the voltage value at the point when the discharge of the plurality of battery cells (BC) is completed. In some embodiments, the point when discharge is completed may mean the point when the SOC (State Of Charge) of the plurality of battery cells (BC) reaches a predetermined value. For example, it may mean the point when the SOC of the plurality of battery cells (BC) reaches 16%. For example, it may mean the point when the SOC of the plurality of battery cells (BC) reaches 17%. For example, it may mean the point when the SOC of the plurality of battery cells (BC) reaches 18%. For example, it may refer to the point when the SOC of the plurality of battery cells (BC) reaches 19%. For example, it may refer to the point when the SOC of the plurality of battery cells (BC) reaches 20%. For example, it may refer to the point when the SOC of the plurality of battery cells (BC) reaches 21%. For example, it may refer to the point when the SOC of the plurality of battery cells (BC) reaches 22%. For example, it may refer to the point when the SOC of the plurality of battery cells (BC) reaches 23%. For example, it may refer to the point when the SOC of the plurality of battery cells (BC) reaches 24%. For example, it may refer to the point when the SOC of the plurality of battery cells (BC) reaches 25%. For example, it may refer to the point when the SOC of the plurality of battery cells (BC) reaches 26%.

In some embodiments, the SOC of the plurality of battery cells (BC) at the point when discharge is completed may be lower than the shipping SOC. The shipping SOC refers to the state of charge of the battery cell at the time of shipment. In some embodiments, the shipping SOC may be 25% or higher but less than 50%. In some embodiments, the shipping SOC may be 25% or higher but less than 30%. The shipping SOC may vary depending on factors such as temperature and the chemical characteristics of the battery cell and is not limited to the embodiments described above. According to exemplary embodiments, the SOC at the end of charging for the plurality of battery cells (BC) may be set to be lower than 100% but higher than the shipping SOC, thereby potentially reducing the time and energy consumed in defect inspection.

In some embodiments, the predetermined voltage may be higher than 2.5V. V denotes the unit of voltage, volt. In some embodiments, the predetermined voltage may be higher than 2.6V. In some embodiments, the predetermined voltage may be higher than 2.7V. In some embodiments, the predetermined voltage may be higher than 2.8V. In some embodiments, the predetermined voltage may be higher than 2.9V. In some embodiments, the predetermined voltage may be higher than 3.0V. In some embodiments, the predetermined voltage may be higher than 3.1V. In some embodiments, the predetermined voltage may be higher than 3.2V. In some embodiments, the predetermined voltage may be higher than 3.3V. In some embodiments, the predetermined voltage may be higher than 3.4V. In some embodiments, the predetermined voltage may be higher than 3.5V. The predetermined voltage may vary depending on the chemical characteristics of the battery cell and is not limited to the embodiments described above.

Referring to FIGS. 1 and 12, according to exemplary embodiments, the plurality of battery cells (BC) may be discharged to the predetermined voltage. In the section where discharge to the predetermined voltage occurs, solid lines and dashed lines are shown overlapping. Here, the predetermined voltage may be substantially the same as the shipping voltage. In some embodiments, after the voltage of the plurality of battery cells (BC) reaches the predetermined voltage, they may be discharged while maintaining the predetermined voltage. That is, after reaching the shipping voltage, the plurality of battery cells (BC) may be discharged while maintaining the shipping voltage.

(Third embodiment)

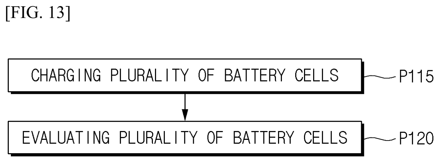

FIG. 13 is a flowchart for explaining a method of manufacturing a secondary battery according to other exemplary embodiments.

Referring to FIGS. 1, 10, and 13, the method of manufacturing a secondary battery may include charging a plurality of battery cells (BC) at P115 and evaluating the plurality of battery cells (BC) at P120.

In some embodiments, the plurality of battery cells (BC) may not be fully charged. That is, the plurality of battery cells (BC) may be charged such that their SOC is less than 100%. Accordingly, the time and energy consumed in the defect inspection may be reduced. For example, the SOC at the end of charging the plurality of battery cells (BC) may be lower than 85%. For example, the SOC at the end of charging the plurality of battery cells (BC) may be lower than 84%. For example, the SOC at the end of charging the plurality of battery cells (BC) may be lower than 83%. For example, the SOC at the end of charging the plurality of battery cells (BC) may be lower than 82%. For example, the SOC at the end of charging the plurality of battery cells (BC) may be lower than 81%. For example, the SOC at the end of charging the plurality of battery cells (BC) may be lower than 80%. For example, the SOC at the end of charging the plurality of battery cells (BC) may be lower than 75%. For example, the SOC at the end of charging the plurality of battery cells (BC) may be lower than 74%. For example, the SOC at the end of charging the plurality of battery cells (BC) may be lower than 73%. For example, the SOC at the end of charging the plurality of battery cells (BC) may be lower than 72%. For example, the SOC at the end of charging the plurality of battery cells (BC) may be lower than 71%. For example, the SOC at the end of charging the plurality of battery cells (BC) may be lower than 70%. For example, the SOC at the end of charging the plurality of battery cells (BC) may be lower than 65%. For example, the SOC at the end of charging the plurality of battery cells (BC) may be lower than 64%. For example, the SOC at the end of charging the plurality of battery cells (BC) may be lower than 63%. For example, the SOC at the end of charging the plurality of battery cells (BC) may be lower than 62%. For example, the SOC at the end of charging the plurality of battery cells (BC) may be lower than 61%. The SOC at the end of charging the plurality of battery cells (BC) may vary depending on the chemical characteristics of the battery cells and is not limited to the above-described embodiments.

In some embodiments, the SOC at the end of charging the plurality of battery cells (BC) may be higher than the shipping SOC.

In some embodiments, the plurality of battery cells (BC) may be discharged after being charged for defect inspection and then recharged to the shipping voltage. The SOC at the end of charging the plurality of battery cells (BC) may be higher than the shipping SOC, and the SOC at the end of discharging the plurality of battery cells (BC) may be lower than the shipping SOC. Accordingly, the time and energy consumption for defect inspection of the plurality of battery cells (BC) may be reduced.

P120 is substantially identical to that described with reference to FIGS. 1 through 9, so redundant descriptions thereof are omitted.

According to exemplary embodiments, standardized electrical parameters of the plurality of battery cells (BC) can be collected during the charging interval of the plurality of battery cells (BC). Consequently, the discharge interval (D2) and recharge interval (D3) of the plurality of battery cells (BC) can be omitted, potentially improving the throughput of secondary battery manufacturing.

According to exemplary embodiments, evaluation of the electrical parameters collected during charging of the plurality of battery cells (BC) may be performed during charging of the plurality of battery cells (BC) or after charging termination. In some embodiments, charging of defective ones among the plurality of battery cells (BC) may be stopped based on the evaluation results. Accordingly, the time and energy consumed for defect inspection can be reduced. In some embodiments, the plurality of battery cells (BC) can be discharged after charging. In some embodiments, based on the evaluation results, the discharge of defective ones among the plurality of battery cells (BC) can be stopped. Accordingly, the time and energy consumed for defect inspection can be reduced.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

**Claims**

1.  A secondary battery manufacturing method comprising:

    discharging a plurality of battery cells; and
    evaluating the plurality of battery cells based on the voltage and current of the plurality of battery cells measured during discharge of the plurality of battery cells, wherein
    evaluating the plurality of battery cells includes calculating electrical parameters of the plurality of battery cells and standardizing the electrical parameters of the plurality of battery cells to calculate standardized electrical parameters of the plurality of battery cells.

2.  The secondary battery manufacturing method of claim 1, wherein
    the electrical parameters include voltage.

3.  The secondary battery manufacturing method of claim 1, wherein
    the electrical parameters include differential voltage.

4.  The secondary battery manufacturing method of claim 1, wherein
    the electrical parameters include differential capacity.

5.  The secondary battery manufacturing method of claim 1, wherein
    the electrical parameters of the plurality of battery cells are standardized based on the average and standard deviation of the electrical parameters of the plurality of battery cells.

6.  The secondary battery manufacturing method of claim 1, wherein
    the plurality of battery cells is simultaneously transferred by a battery tray.

7.  The secondary battery manufacturing method of claim 1, wherein
    evaluating the plurality of battery cells is based on the standardized electrical parameters of the plurality of battery cells and an outlier detection model.

8.  The secondary battery manufacturing method of claim 7, wherein
    the outlier detection model is trained based on the electrical parameters of a plurality of normal battery cells.

9.  The secondary battery manufacturing method of claim 7, wherein

    the outlier detection model is trained based on the electrical parameters of first normal battery cells among the plurality of normal battery cells, and
    the distance between the electrical parameters of the first normal battery cells and the average of the electrical parameters of the normal battery cells is three times the standard deviation or less.

10. The secondary battery manufacturing method of claim 1, wherein
    discharging the plurality of battery cells is **characterized by** not fully discharging the plurality of battery cells.

11. The secondary battery manufacturing method of claim 1, wherein
    the plurality of battery cells is discharged to a predetermined voltage.

12. The secondary battery manufacturing method of claim 11, wherein
    the predetermined voltage is higher than the discharge cutoff voltage.

13. The secondary battery manufacturing method of claim 1, wherein
    evaluating the plurality of battery cells is performed during or after the discharge of the plurality of battery cells.

14. A secondary battery manufacturing method comprising:

    charging a plurality of battery cells; and

evaluating the plurality of battery cells based on the voltage and current of the plurality of battery cells measured while charging the plurality of battery cells, wherein
evaluating the plurality of battery cells includes calculating electrical parameters of the plurality of battery cells and standardizing the electrical parameters of the plurality of battery cells to calculate standardized electrical parameters of the plurality of battery cells.

15. The secondary battery manufacturing method of claim 14, wherein
the electrical parameters include voltage.

16. The secondary battery manufacturing method of claim 14, wherein
the electrical parameters include differential voltage.

17. The secondary battery manufacturing method of claim 14, wherein
the electrical parameters include differential capacity.

18. The secondary battery manufacturing method of claim 14, wherein
the electrical parameters of the plurality of battery cells are standardized based on the average and standard deviation of the electrical parameters of the plurality of battery cells.

19. The secondary battery manufacturing method of claim 14, wherein
the plurality of battery cells is simultaneously transferred by a battery tray.

20. The secondary battery manufacturing method of claim 14, wherein
evaluating the plurality of battery cells is based on the standardized electrical parameters of the plurality of battery cells and an outlier detection model.

21. The secondary battery manufacturing method of claim 20, wherein
the outlier detection model is trained based on the electrical parameters of a plurality of normal battery cells.

22. The secondary battery manufacturing method of claim 20, wherein

the outlier detection model is trained based on the electrical parameters of first normal battery cells among the plurality of normal battery cells, and
the distance between the electrical parameters of the first normal battery cells and the average of the electrical parameters of the normal battery cells is three times the standard deviation or less.

23. The secondary battery manufacturing method of claim 14, wherein
charging the plurality of battery cells is **characterized by** not fully charging the plurality of battery cells.

24. The secondary battery manufacturing method of claim 14, wherein
evaluating the plurality of battery cells is performed during charging of the plurality of battery cells or after charging has ended.

[FIG. 1]

[FIG. 2]

| DISCHARGING PLURALITY OF BATTERY CELLS | ~ P110 |

↓

| EVALUATING PLURALTIY OF BATTERY CELLS | ~ P120 |

[FIG. 3]

P120

| CALCULUATING ELECTRICAL PARAMETERS OF PLURALITY OF BATTERY CELLS | P121 |
|---|---|
| STANDARDIZING ELECTRICAL PARAMETERS OF PLURALITY OF BATTERY CELLS | P123 |
| EVALUATING PLURALITY OF BATTERY CELLS BASED ON MODEL | P125 |

[FIG. 4]

[FIG. 5]

[FIG. 6]

dQdV

[FIG. 7]

Tray Normalized V

[FIG. 8]

Tray Normalized dVdQ

[FIG. 9]

Tray Normalized dQdV

[FIG. 10]

[FIG. 11]

[FIG. 12]

[FIG. 13]

| CHARGING PLURALITY OF BATTERY CELLS | ~P115 |

↓

| EVALUATING PLURALITY OF BATTERY CELLS | ~P120 |

## INTERNATIONAL SEARCH REPORT

| International application No. |
| --- |
| **PCT/KR2025/006356** |

| A. | CLASSIFICATION OF SUBJECT MATTER |
| --- | --- |
| | **H01M 10/44**(2006.01)i; **H01M 10/48**(2006.01)i; **H01M 10/42**(2006.01)i |

According to International Patent Classification (IPC) or to both national classification and IPC

| B. | FIELDS SEARCHED |
| --- | --- |

Minimum documentation searched (classification system followed by classification symbols)

H01M 10/44(2006.01); G01R 31/36(2006.01); G01R 31/367(2019.01); G01R 31/3835(2019.01); G01R 31/3842(2019.01); G01R 31/385(2019.01); G01R 31/392(2019.01); H01M 10/0566(2010.01); H01M 10/058(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 충전(charge), 방전(discharge), 전압(voltage), 트레이(tray)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2280709 B1 (THE INDUSTRY & ACADEMIC COOPERATION IN CHUNGNAM NATIONAL UNIVERSITY (IAC)) 21 July 2021 (2021-07-21) paragraphs [0028], [0050] and claim 1 | 1,2,5,7-15,18,20-24 |
| Y | | 3,4,6,16,17,19 |
| Y | JP 2023-123905 A (PRIMEARTH EV ENERGY CO., LTD.) 06 September 2023 (2023-09-06) claims 1, 2 | 3,4,16,17 |
| Y | KR 10-2021-0083921 A (LG ENERGY SOLUTION, LTD.) 07 July 2021 (2021-07-07) claims 1, 10 | 6,19 |
| A | KR 10-2023-0057894 A (LG ENERGY SOLUTION, LTD.) 02 May 2023 (2023-05-02) paragraph [0128] | 1-24 |
| A | KR 10-2326437 B1 (LG ENERGY SOLUTION, LTD.) 15 November 2021 (2021-11-15) paragraph [0059] | 1-24 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 August 2025** | **11 August 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/006356**

| Patent document cited in search report | | | Publication date (day/month/year) | Patent family member(s) | | | Publication date (day/month/year) |
|---|---|---|---|---|---|---|---|
| KR | 10-2280709 | B1 | 21 July 2021 | KR | 10-2021-0088915 | A | 15 July 2021 |
| JP | 2023-123905 | A | 06 September 2023 | | None | | |
| KR | 10-2021-0083921 | A | 07 July 2021 | KR | 10-2707174 | B1 | 20 September 2024 |
| KR | 10-2023-0057894 | A | 02 May 2023 | CN | 116829966 | A | 29 September 2023 |
| | | | | EP | 4321884 | A1 | 14 February 2024 |
| | | | | EP | 4321884 | A4 | 23 October 2024 |
| | | | | EP | 4321884 | B1 | 16 July 2025 |
| | | | | JP | 2024-500893 | A | 10 January 2024 |
| | | | | JP | 7605416 | B2 | 24 December 2024 |
| | | | | US | 2024-0410959 | A1 | 12 December 2024 |
| | | | | WO | 2023-068899 | A1 | 27 April 2023 |
| KR | 10-2326437 | B1 | 15 November 2021 | CN | 111418107 | A | 14 July 2020 |
| | | | | CN | 111418107 | B | 25 August 2023 |
| | | | | EP | 3703177 | A1 | 02 September 2020 |
| | | | | EP | 3703177 | A4 | 24 February 2021 |
| | | | | EP | 3703177 | B1 | 04 January 2023 |
| | | | | ES | 2937845 | T3 | 31 March 2023 |
| | | | | HU | E061233 | T2 | 28 May 2023 |
| | | | | KR | 10-2020-0018308 | A | 19 February 2020 |
| | | | | PL | 3703177 | T3 | 13 March 2023 |
| | | | | US | 11456493 | B2 | 27 September 2022 |
| | | | | US | 2021-0167432 | A1 | 03 June 2021 |
| | | | | WO | 2020-032545 | A1 | 13 February 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240063470

- KR 1020250052890